# EUROPEAN PATENT APPLICATION

(11) **EP 1 345 413 A2**
(43) Date of publication of application: **17.09.2003**
(21) Application number: 03251502.5
(22) Date of filing: 12.03.2003
(51) Int. Cl.: H04N 1/407

(54) **Image processor, host unit for image processing, image processing method, and computer products**

(30) Priority: 14.03.2002 JP 2002069717; 11.03.2003 JP 2003065638
(71) Applicant: Ricoh Company Ltd., Tokyo 143-8555 (JP)
(72) Inventor: Ikeda, Ikuyo, c/o Ricoh Company, Ltd., Ohta-ku., Tokyo 143-8555 (JP)
(74) Representative: Leeming, John Gerard

(57) **Abstract**

In an image processor, an image property determination unit extracts a portion having extremely high luminance in image data as a high luminance pixel area, from the whole image, to determine the property of the input image data. An edge pixel extraction unit extracts pixels in the portion where the brightness level largely changes, for each of the respective pixels. A subject portion determination unit regards the position of the edge pixel as a boundary between the high luminance pixel area and the subject portion, based on the information for the extracted high luminance pixel area and the edge pixels. The subject portion determination unit then determines an area as the subject portion, the area being opposite to the high luminance pixel area with respect to the boundary. A brightness correction unit corrects the brightness of the subject portion and the high luminance pixel area.

## Description

The present invention relates to an image processor into which data for an image picked-up by a digital camera or the like is input, a host unit for image processing, an image processing method, and computer products.

In general, when a subject is photographed under such surroundings that a light source such as the sun, illumination, or a light exists in the background of the subject, an image of the subject becomes a backlight image in which the subject becomes dark. Therefore, it is necessary to detect whether there is any backlight condition, correct the backlight condition if it is detected, and to express the subject brighter.

Regarding this point, for an imaging camera such as a digital camera, various techniques as follows have been proposed and executed. That is, backlight detection or backlight correction is performed on a subject that becomes a backlight image. One example of conventional mechanical control techniques used for such backlight detection and backlight correction techniques is that aperture opening is adjusted to increase or decrease the quantity of light. Further, a digital camera provided with such an exposure control section as explained below is disclosed in Japanese Patent Application Laid-Open Publication No. 2002-204388, The exposure control section determines whether an image is backlighted, and determines exposure in an area other than a backlighted area if it is determined that the image is not backlighted to control appropriate exposure by controlling an amount of light. If it is determined that the image is backlighted, then the exposure control section determines which type of backlight exists, and switches a light metering system between a spot metering system and a centerweighted metering system depending on the determined backlight type, and then controls the light amount to control the exposure to an appropriate amount.

However, there is a problem described below when the data for an image photographed by a digital camera or the like without performing the backlight correction or the data for an image obtained by reading a photograph taken without performing the backlight correction by a scanner is to be printed by a printer. That is, the correction technique of the digital camera or the like at a photographing site is not always applied for the backlight correction specialized for the printer. Therefore, when the correction technique of the digital camera or the like is directly applied for printing the image by the printer, fogging of the subject or the like occurs in a print, to thereby decrease the printing quality. As described above, the backlight correction technique capable of providing a print having less fogging or the like by appropriately performing backlight correction on the image data input to the printer, has not been disclosed yet.

The present invention has been achieved in order to solve the above problem. It is an object of the present invention to provide an Image processor, a host unit for image processing, an image processing method, an image processing program, and a computer-readable storage medium, capable of achieving at least one of two features, that is, appropriate determination as to whether an input image data is a backlight image, and improvement of the printed image quality by correcting the image appropriately when it is determined that the image is the backlight image.

The image processor according to one aspect of this invention, comprises an image determination unit that determines, based on a property of an image input, whether the image is a backlight image, and a brightness correction unit that subjects at least a subject portion of the image to brightness correction that indicates correction of a dark part in the image when the image determination unit determines that the image is the backlight image.

The host unit for image processing according to another aspect of this invention, comprises a storage unit that stores information for an image input, and an image processing unit. The image processing unit includes an image determination unit that reads information for the image from the storage unit, and determines, based on a property of the read image, whether the image is a backlight image, and a brightness correction unit that subjects at least a subject portion included in the image to brightness correction that indicates correction of a dark part in the image, when the image determination unit determines that the image is the backlight image. The host unit also comprises an image data processing unit that prepares print data for operating an image forming apparatus from data for the image after the brightness correction, and outputs the print data to the image forming apparatus.

The image processing method according to still another aspect of this invention, comprises an image determining step of determining, based on a property of an image input, whether the image is a backlight image, and a brightness correcting step of subjecting at least a subject portion of the image to brightness correction that indicates correction of a dark part in the image, when the image is determined as the backlight image.

The image processing program, according to still another aspect of this invention, allows a computer to execute an image processing procedure. The image processing procedure includes an image determining procedure for determining, based on a property of an image input, whether the image is a backlight image, and a brightness correcting procedure for subjecting at least a subject portion of the image to brightness correction that indicates correction of a dark part in the image, when the image is determined as the backlight image. The image processing program allows the computer to further execute an image data processing procedure for preparing print data for operating an image forming apparatus from data for the image after the brightness correction, and outputting the print data to the image forming apparatus.

The computer-readable storage medium, according to still another aspect of this invention, stores an image processing program to allow a computer to execute an image processing procedure. The image processing procedure includes an image determining procedure for determining, based on a property of an image input, whether the image is a backlight image, and a brightness correcting procedure for subjecting at least a subject portion included in the image to brightness correction that indicates correction of a dark part in the image, when the image is determined as the backlight image. The computer-readable storage medium stores the image processing program to allow the computer to further execute an image data processing procedure for preparing print data for operating an image forming apparatus from data for the image after the brightness correction, and outputting the print data to the image forming apparatus.

These and other objects, features and advantages of the present invention are specifically set forth in or will become apparent from the following detailed descriptions of the invention when read in conjunction with the accompanying drawings.
Fig. 1 is a block diagram of a host unit for image processing having an image processing section according to one embodiment of the present invention;
Fig. 2 is a block diagram of an image processor as the image processing section of a printer driver according to the embodiment;
Fig. 3 is a flowchart of an image processing method according to the embodiment;
Fig. 4A and Fig. 4B shows one example of a backlight image; and
Fig. 5 shows an edge pixel detection method.

An embodiment of the present invention is explained in detail with reference to the drawings. It is noted that the present invention is not limited by the embodiment. The constituents in the embodiment include ones easily thought of by those skilled in the art or substantially the same ones.

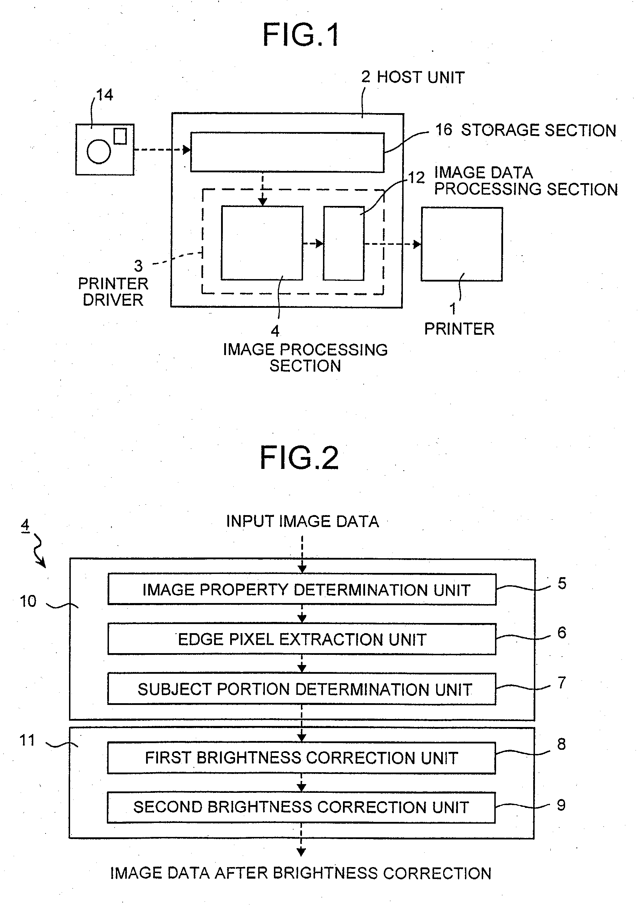

Fig. 1 is a block diagram of a host unit for image processing that has an image processing section according to the embodiment of the present invention. An image processing section 4 provided in a host unit 2 has a feature in that the processing section 4 detects a backlight image, corrects a darkened subject portion in the backlight image to make it brighter, as well as taking the corrected amount into consideration to correct a high luminance area in the backlight image to a darker direction, to thereby obtain a printed image in which the brightness is balanced as a whole. In this embodiment, an example of applying the present invention to a printer driver 3 provided in the host unit 2 such as a personal computer connected to a printer 1, is explained below. The printer driver 3 may realize its function by software.

The host unit 2 temporarily stores image data input through a digital camera 14 or a scanner in a storage section 16 such as a hard disk or a memory, prepare processed image data by being subjected to data processing or any other processing as required, and outputs the processed image data to the image processing section 4 in the printer driver 3. The image processing section 4 subjects the image data to brightness correction explained later to output the processed image data to the image data processing section 12 of the printer driver 3. The image data processing section 12 prepares a print instruction or print data based on the image data subjected to the brightness correction by the image processing section 4 to output the prepared instruction or data to the printer 1, The connection between the host unit 2 and the printer 1 may be a direct one-to-one connection, or a connection via a local area network (LAN). The printing method of the printer 1 is not particularly limited, and for example, a laser printer, an ink jet printer, a thermal printer, or the like can be appropriately used.

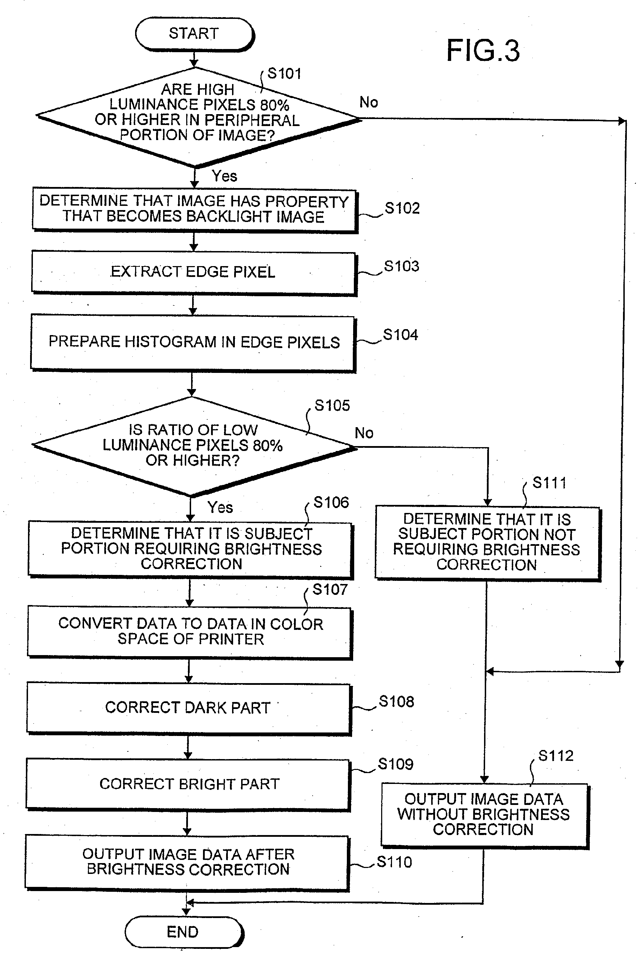

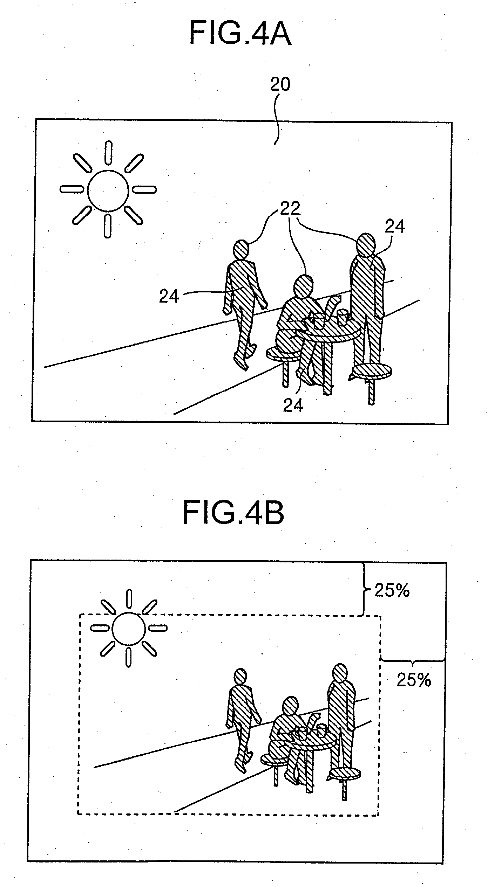

Fig. 2 is a block diagram of the image processor as the image processing section of the printer driver according to the embodiment of the present invention. Fig. 3 is a flowchart of the image processing method according to the embodiment of the present invention. Fig. 4A and Fig. 4B show one example of a backlight image. This embodiment is characterized in the function of the image processing section 4 provided in the printer driver 3.

The image processing section 4 according to the embodiment subjects the image data input from the digital camera 14 or the like to processing by respective functions of an image property determination unit 5, an edge pixel extraction unit 6, a subject portion determination unit 7, a first brightness correction unit 8 that corrects a subject portion (dark part), and a second brightness correction unit 9 that corrects a high luminance pixel area. The image processing section 4 then outputs the processed image data suitable for printing by the printer 1. Among the units explained above, the image property determination unit 5, the edge pixel extraction unit 6, and the subject portion determination unit 7 form in an image determination unit 10. Further, the first brightness correction unit 8 and the second brightness correction unit 9 form a brightness correction unit 11.

The image data that is possible to be a backlight image with the light source existing inside the data, has a portion having extremely high luminance in the whole image data. Here, the backlight image stands for an image in which, when a subject portion and a background portion of an image are compared, the subject portion has low luminance, that is, is darker than the background portion. As a scale indicating the luminance, brightness or gray scale can be used.

The image property determination unit 5 determines that the image has a property that becomes a backlight image, when a high luminance portion, that is, a high luminance pixel area 20 shown in Fig. 4A exist in a predetermined area from the end of the input image at more than a predetermined ratio. Here, "high luminance" indicates that the brightness in the image data is higher than a predetermined threshold luminance. In this embodiment, for example, a portion in which the threshold luminance is 245 or higher in a gray scale value is determined to have high luminance. The value of the threshold luminance can be appropriately changed according to conditions such as gradation expression ability of the printer 1. Specific determining procedure of the image property is explained below.

At first, a histogram of pixels in a portion by 25% (1/4) from the vertical and lateral ends (peripheral portion) of the input image is prepared. For example, when the number of pixels having high luminance is 80% or higher of the whole pixel number in the peripheral portion (step S101: Yes), the peripheral portion is determined to be a high luminance pixel area (see Fig. 4B). The input image is then determined to have a property that becomes a backlight image (step S102). When the number of pixels having high luminance is less than 80% of the whole pixel' number in the peripheral portion, the input image does not have a property that becomes a backlight Image, and hence the image data is output without brightness correction of the image (step S112). The ratio of pixels having high luminance is not limited to 80%.

The property of the input image may be determined as follows. For example, a portion having a threshold luminance of 245 or higher in the gray scale value is extracted as the high luminance pixel area 20, to determine a ratio of the high luminance pixel area 20 occupying in the whole image. When the ratio of the high luminance pixel area 20 occupying in the whole image is larger than a predetermined value, it is determined that the input image has a property that becomes a backlight image. When the ratio of the high luminance pixel area 20 occupying in the whole image is larger than, for example, 30% of the whole pixel area, it is determined that the input image has a property that becomes a backlight image. When the ratio of the high luminance pixel area 20 occupying in the whole image is not larger than 30% of the whole pixel area, the input image does not have a property that becomes a backlight image, and hence the image data is output without brightness correction of the image. The ratio of the high luminance pixel area is not limited to 30%.

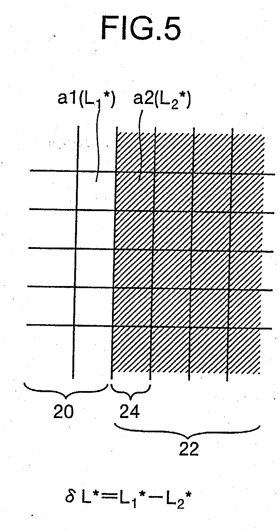

Fig. 5 shows an edge pixel detection method. The edge pixel extraction unit 6 extracts a pixel in the portion where the brightness level largely changes as an edge pixel, for each of the respective pixels based on a known edge extracting technology. As shown in Fig. 5, this edge pixel extraction unit 6 compares the brightness information for each pixel with each other. When a brightness difference δL* = L₁* - L₂* between adjacent pixels a1 and a2 is not smaller than 70, the edge pixel extraction unit 6 determines that the pixel a2 is an edge pixel 24. By this function, the edge pixel 24 is extracted (step S103), wherein L* is L* in the CIELAB color space.

The subject portion determination unit 7 prepares a histogram in the area surrounded by the edge pixels 24 (step S104). When the ratio of low luminance pixels is 80% or higher (step S105: Yes), the subject portion determination unit 7 determines that the area surrounded by the edge pixels 24 is a subject portion 22 requiring brightness correction (step S106). In this case, the low luminance pixel is set to be, for example, a pixel having a gray scale value of not larger than 20. It is assumed that the subject portion 22 is placed in the center of the normal image (hereinafter the same). The edge pixel 24 determined as a boundary is included in the subject portion 22 (hereinafter the same).

When the ratio of the low luminance pixels is lower than 80% (step S105; No), the area surrounded by the edge pixels 24 is determined as the subject area 22 that does not require brightness correction (step S111). In this case, the image data is output without performing brightness correction of the image (step S112). The ratio of the low luminance pixels is not limited to 80%. The image property determination unit 5, the edge pixel extraction unit 6, and the subject portion determination unit 7 realize the function of the image determination unit 10.

The subject portion 22 may be determined by the following procedure. At first, relating to the image data determined as a backlight image by the image property determination unit 5, the position of the edge pixel 24 is regarded as a boundary between the high luminance pixel area 20 and the subject portion 22, based on the information for the extracted high luminance pixel area 20 and edge pixels 24. The area located opposite to the high luminance pixel area 20 with respect to the boundary is determined as the subject portion 22. In other words, the portion adjacent to the high luminance pixel area 20, having lower brightness than the high luminance pixel area, is determined as the subject portion 22, When the ratio of the low luminance pixels in the whole subject portion 22 is 80% or higher, it is determined that the portion is the subject portion 22 requiring the brightness correction. In this case, the low luminance pixel is a pixel having a gray scale value of not larger than 20.

When the property of the backlight image is considered, the subject portion 22 that becomes the low luminance pixel area (dark part) is adjacent to the high luminance pixel area 20. Therefore, in determining whether the input image data is a backlight image, as described above, the backlight image can be appropriately determined by using the high luminance pixel area 20 extracted by the image determination unit 10 and the edge pixels 24 forming a boundary between the high luminance pixel area 20 and the subject portion 22. In other words, based on the information of the high luminance pixel area 20 and the edge pixels 24 extracted by the image determination unit 10, the low luminance pixel area adjacent to the edge pixels 24 and located opposite to the high luminance pixel area 20 can be appropriately specified as the subject portion 22.

Subsequent to the determination processing, the brightness correction unit 11 corrects the brightness of the subject portion 22 and the high luminance pixel area 20 in the image data. It is desired to convert the image data in the color space of the digital camera 12 as the imaging unit to image data in the color space of the printer 1 as the image forming apparatus and then to correct the image data by the brightness correction unit 11. In this manner, the subject portion and the high luminance pixel area 20 can be corrected within the color space of the printer 1, and as a result, the backlight image can be appropriately corrected, thus providing a print having less fogging.

The image data specifying the subject portion 22 is converted to the image data in the color space of the printer 1 as the image forming apparatus (step S107). Of the image data determined as the backlight image, the first brightness correction unit 8 for the subject portion 22 (dark part) performs brightness correction on the image data for the subject portion 22 whose position is specified, so as to increase the lightness (step S108), This brightness correction is referred to as "dark part correction". Since the lightness of the subject portion 22 can be increased at a certain rate by this first brightness correction unit 8, the subject portion darkened by the backlight can be made clear.

The dark part correction is performed in the following manner, That is, it is determined whether γ in the subject portion 22 is fitted within a range of γ that can be expressed by the printer 1. When it cannot be fitted within the range of γ, the amount of dark part correction is determined so that it is fitted within the range of γ that can be expressed by the printer 1, to perform γ correction.

On the other hand, of the image data determined as the backlight image, the second brightness correction unit 9 for the high luminance pixel area 20 performs brightness correction on the image data in the portion extracted as the high luminance pixel area 20 so as to become slightly dark (step S109). This brightness correction is referred to as "bright part correction". The amount of brightness correction by the second brightness correction unit 9 is set so as to balance as the whole image, according to the amount of brightness correction by the first lightness correction unit 8 for the subject portion (dark part). This is because the luminance of the whole image may become too high depending on the amount of dark part correction, which may cause a state that a so-called fogging occurs, and hence bright part correction is applied for avoiding the occurrence. In this case, the bright part correction can be realized by performing the γ correction in the correction amount of dark part correction performed on the subject portion 22 at step S108.

For example, when a difference δL* between the lightness of the subject portion 22 after the dark part correction and the lightness of the high luminance pixel area 20 adjacent to the subject portion 22 is smaller than a predetermined value, the second brightness correction unit 9 may perform bright part correction on the high luminance pixel area. At this time, the bright part correction can be realized by performing the γ correction in the correction amount of dark part correction performed on the subject portion 22 at step S108.

When the brightness correction is finished, the brightness correction unit 11 outputs the image data after the brightness correction (step S110), to finish the correction of the backlight image. In this manner, the first brightness correction unit 8 and the second brightness correction unit 9 realize the function of the brightness correction unit 11. The dark part correction and the bright part correction are performed such that the lightness after correction is fitted within the gradation that can be expressed in the color space of the printer 1. As a result, when the image data is printed by the image forming apparatus such as a printer, a well-balanced print having less blurring or fogging of the image can be obtained.

In the embodiment of the present invention, the area located opposite to the high luminance pixel area 20, designating the position of the edge pixels 24 as a boundary, is basically specified as the image data for the subject portion 22, based on the information of the extracted high luminance pixel area 20 and edge pixels 24. By performing the brightness correction, that is, the dark part correction of the image data of the specified subject portion 22, the subject portion 22 darkened by the backlight can be turned into a bright image.

At this time, by performing brightness correction on the subject portion 22 requiring the dark part correction, the luminance of the image is improved as a whole, and an image including fogging may be obtained in some cases. In such cases, the second lightness correction unit performs balanced brightness correction as a whole image, with respect to the image data for the high luminance pixel area 20. As a result, the subject portion 22 darkened by the backlight is corrected to a clear image, and to an excellent image data having no fogging, as a whole image. Even in the case of a backlight image, image data subjected to such correction is output to the printer 1, and as a result, a printed image well balanced in the lightness as a whole and having good quality can be obtained.

A program for realizing the functions of the printer driver 3 and the image processing section 4 according to the embodiment of the present invention may be recorded on a computer-readable storage medium, and the program may be loaded into a computer system for execution, to thereby specify the backlight image and perform brightness correction on the specified image. The "computer system" herein includes hardware such as OS and peripheral equipment.

The image processing method according to the embodiment of the present invention can be realized by executing a program prepared in advance by a computer such as a personal computer and workstation. This program may be distributed via a network such as the Internet. The program can be also recorded on a computer-readable storage medium, such as 2 hard disk, flexible disk (FD), CD-ROM, MO, and DVD, and read from the storage medium to be executed by the computer. The program may be one for realizing a part of these functions, or may be one that can realize the functions by a combination with the program already recorded in the computer system.

The image processing section 4 may be configured to realize functions of the image processing section 4 by forming a processing section with a memory and a central processing unit (CPU), and loading a printer driver program and an image processing program for realizing the functions into the memory to allow the CPU to execute the program.

As described above, in the image processor according to one aspect of this invention, it is determined based on a property of an input image whether the image is a backlight image, and when the image is determined as the backlight image, the dark part correction is performed on the darkened subject portion, taking the balance of the whole image into consideration. As a result, appropriate brightness correction can be performed even on an already photographed backlight image, Further, when the photographed backlight image is printed by an image forming apparatus, it is possible to improve the printing quality by using the corrected image data.

Moreover, it is determined whether the input image is a backlight image, based on a ratio of the high luminance pixel area occupying a predetermined area in the image. Therefore, it can be appropriately determined whether the image is the backlight image.

Furthermore, based on the information for the extracted high luminance pixel area and edge pixel area, the area surrounded by the edge pixels is specified as a subject portion. As a result, appropriate dark part correction can be performed on the subject portion, and hence it is possible to correct the darkened subject portion to a bright image. Further, by using the corrected image data, it is possible to improve the printing quality even if the image is the backlight image.

Moreover, based on the information for the extracted high luminance pixel area and edge pixel area, by regarding the position of the edge pixel as a boundary, an area opposite to the high luminance pixel area is specified as a subject portion. As a result, appropriate dark part correction can be performed on the subject portion, and hence, it is possible to correct the darkened subject portion to a bright image. Further, by using the corrected image data, it is possible to improve the printing quality of even the backlight image.

Furthermore, the dark part correction is performed on the subject portion, and at the same time the bright part correction is performed on the high luminance pixel area. As a result, well-balanced brightness correction can be performed as a whole image, and the subject portion can be made clear, and can be corrected to an excellent image without fogging. Further, by using the corrected image data, it is possible to improve the printing quality of even the backlight image.

In the host unit for image processing according to another aspect of this invention, it is determined whether the image is a backlight image based on the property of the input image. When the image is determined as the backlight image, the dark part correction is performed on the darkened subject portion, taking the balance of the whole image into consideration. As a result, it is possible to print out an appropriately brightness-corrected image having a good image quality even when the backlight image is input at the time of printing by the Image forming apparatus.

Furthermore, since the dark part correction is performed on the subject portion, and at the same time the bright part correction is performed on the high luminance pixel area. Therefore, well-balanced brightness correction can be performed as a whole image. As a result, the subject portion can be made clear, and the image can be corrected to an excellent image without fogging. Thus, it is possible to print out an image having excellent image quality.

In the image processing method according to still another aspect of this invention, it is determined whether the image is a backlight image based on the property of the input image. When it is the backlight image, brightness correction is performed on the darkened subject portion, taking the balance of the whole image into consideration. As a result, appropriate brightness correction can be performed even on the already photographed backlight image. Further, according to the image processing program or the computer-readable storage medium, the image processing method can be realized by allowing a computer to execute the program.

Moreover, since it is determined whether the image is a backlight image, based on a ratio of a high luminance pixel area occupying the predetermined area in the image, it can be appropriately determined whether the image is the backlight image. Since a low luminance area adjacent to the high luminance pixel area is determined as a subject portion, appropriate dark part correction is performed on the subject portion requiring the correction, thereby an appropriate image can be obtained. Further, according to the image processing program, the image processing method can be realized by allowing a computer to execute the program.

Furthermore, based on the information for the extracted edge pixel area, appropriate dark part correction is performed on an area surrounded by the edge pixels as a subject portion. As a result, the darkened subject portion can be corrected to a bright image. By using the corrected image data, it is possible to improve the printing quality of even the backlight image. Further, according to the image processing program, the image processing method can be realized by allowing a computer to execute the program.

Moreover, by regarding the position of the edge pixels as a boundary, an area opposite to the high luminance pixel area is specified as a subject portion based on the information for the extracted high luminance pixel area and edge pixel area, and appropriate dark part correction is performed thereon. As a result, the darkened subject portion can be corrected to a bright image. Further, by using the corrected image data, it is possible to improve the printing quality of even the backlight image. Further, according to the image processing program, the image processing method can be realized by allowing a computer to execute the program.

Furthermore, the dark part correction is performed on the subject portion, and at the same time the bright part correction is performed on the high luminance pixel area, and hence, well-balanced brightness correction can be performed as a whole image. As a result, the subject portion can be made clear, and can be corrected to an excellent image without fogging. Further, according to the image processing program or the computer-readable storage medium, the image processing method can be realized by allowing a computer to execute the program or the program in the storage medium.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. An image processor comprising:
an image determination unit that determines, based on a property of an image input, whether the image is a backlight image; and
a brightness correction unit that subjects at least a subject portion of the image to brightness correction that indicates correction of a dark part in the image, when the image determination unit determines that the image is the backlight image.

2. The image processor according to claim 1,
wherein the image determination unit includes:
an image property determination unit that extracts a high luminance pixel area included in the image input, and determines a property of the image, based on a ratio of the high luminance pixel area occupying a predetermined area of the image; and
a subject portion determination unit that determines a portion as the subject portion, the portion being adjacent to the high luminance pixel area and having brightness lower than that of the high luminance pixel area.

3. The image processor according to claim 1,
wherein the image determination unit includes:
an image property determination unit that extracts a high luminance pixel area included in the image input, and determines a property of the image, based on a ratio of the high luminance pixel area occupying a predetermined area of the image;
an edge pixel extraction unit that extracts an edge pixel based on a change in brightness of each pixel forming the input image; and
a subject portion determination unit that determines an area surrounded by the edge pixels, as the subject portion.

4. The image processor according to claim 1,
wherein the image determination unit includes:
an image property determination unit that extracts a high luminance pixel area included in the image input, and determines a property of the image, based on a ratio of the high luminance pixel area occupying a predetermined area of the image;
an edge pixel extraction unit that extracts an edge pixel based on a change in brightness of each pixel forming the input image; and
a subject portion determination unit that regards a position of the edge pixel as a boundary based on information for the high luminance pixel area and the edge pixel extracted by the edge pixel extraction unit, and determines an area as the subject portion, the area being opposite to the high luminance pixel area with respect to the boundary.

5. The image processor according to claim 1,
wherein the brightness correction unit subjects the high luminance pixel area to brightness correction that indicates correction of a bright part according to an amount of the correction of the dark part performed on the subject portion.

6. A host unit for image processing, comprising:
a storage unit that stores information for an image input;
an image processor according to any one of claims 1 to 5 wherein said image determination unit reads information for the image from the storage unit; and
an image data processing unit that prepares print data for operating an image forming apparatus from data for the image after the brightness correction, and outputs the print data to the image forming apparatus.

7. An image processing method comprising:
an image determining step of determining, based on a property of an image input, whether the image is a backlight image; and
a brightness correcting step of subjecting at least a subject portion of the image to brightness correction that indicates correction of a dark part of the image, when the image is determined as the backlight image.

8. The image processing method according to claim 7,
wherein the image determining step includes:
an image property determining step of extracting a high luminance pixel area included in the image input, and determining a property of the image, based on a ratio of the high luminance pixel area occupying a predetermined area of the image; and
a subject portion determining step of determining a portion as the subject portion, the portion being adjacent to the high luminance pixel -area and having brightness lower than that of the high luminance pixel area.

9. The image processing method according to claim 7,
wherein the image determining step includes:
an image property determining step of extracting a high luminance pixel area included in the image input, and determining a property of the image, based on a ratio of the high luminance pixel area occupying a predetermined area of the image;
an edge pixel extracting step of extracting an edge pixel based on a change in luminance of each pixel forming the input image; and
a subject portion determining step of determining an area surrounded by the edge pixels, as the subject portion.

10. The image processing method according to claim 7,
wherein the image determining step includes:
an image property determining step of extracting a high luminance pixel area included in the image input, and determining a property of the image, based on a ratio of the high luminance pixel area occupying a predetermined area of the image;
an edge pixel extracting step of extracting an edge pixel based on a change in luminance of each pixel forming the input image; and
a subject portion determining step of regarding a position of the edge pixel as a boundary based on information for the high luminance pixel area and the edge pixel extracted at the edge pixel extracting step, and determining an area as the subject portion, the area being opposite to the high luminance pixel area with respect to the boundary.

11. The image processing method according to claim 7, wherein at the brightness correcting step, brightness correction that indicates correction of a bright part in the image is subjected to the high luminance pixel area according to an amount of the correction of the dark part performed on the subject portion.

12. An image processing method according to any one of claims 7 to 11, further comprising the step of:
preparing print data for operating an image forming apparatus from data for the image after the brightness correction, and outputting the print data to the image forming apparatus.

13. A computer program comprising program code means that, when executed on a computer system, instruct the computer system to perform a method according to any one of claims 7 to 12.

14. A computer readable storage medium having stored thereon a computer program according to claim 13.
